# EUROPEAN PATENT SPECIFICATION

(11) **EP 4 307 910 B1**
(45) Date of publication and mention of the grant of the patent: **10.12.2025**
(21) Application number: 22730219.7
(22) Date of filing: 23.05.2022
(51) Int. Cl.: A23C 9/13, A23L 9/20, A23L 27/00, A23L 33/21

(54) **FLAVORED FIBER BLENDS AND THEIR COMESTIBLE USE**
AROMATISIERTE FASERMISCHUNGEN UND DEREN ESSBARE VERWENDUNG
MÉLANGES DE FIBRE AROMATISÉS ET LEUR UTILISATION COMESTIBLE

(30) Priority: 24.05.2021 US 202163192141 P; 25.06.2021 EP 21181797
(43) Date of publication of application: 24.01.2024
(73) Proprietor: Firmenich SA, 1242 Satigny (CH)
(72) Inventor: GELIN, Jean-Luc, 1242 Satigny (CH); ROZCZKA, Caroline, 1242 Satigny (CH); ERNI, Philipp, 1242 Satigny (CH); THIEBAUT, Nathalie, 1242 Satigny (CH); ELABBADI, Amal, 1242 Satigny (CH)
(74) Representative: dsm-firmenich IP
(86) International application number: PCT/EP2022/063903
(87) International publication number: WO 2022/248405

(56) References cited:
- WO-A1-2021/019252
- US-A- 4 877 627
- US-A- 4 959 227
- US-A1- 2003 104 033
- US-A1- 2006 093 720
- US-A1- 2008 003 265
- US-A1- 2014 255 590
- US-A1- 2015 004 149
- US-A1- 2016 242 450
- MCCLEMENTS DAVID JULIAN ET AL: "The science of plant-based foods: Constructing next-generation meat, fish, milk, and egg analogs", vol. 20, no. 4, 30 May 2021 (2021-05-30), US, pages 4049 - 4100, XP055860231, ISSN: 1541-4337, Retrieved from the Internet <URL:https://onlinelibrary.wiley.com/doi/full-xml/10.1111/1541-4337.12771> DOI: 10.1111/1541-4337.12771

## Description

### TECHNICAL FIELD

The present disclosure relates generally to flavored fiber blends and their use in various comestible products, such as food products, beverage products, nutritional products, including dairy products and dairy analogue products.

### DESCRIPTION OF RELATED ART

The diet of most people in developed parts of the world has increasingly moved towards food and beverages made from processed or refined ingredients. This processing often removes much of the fiber present naturally in unprocessed or minimally processed foods. As a result, people increasingly consume diets that have much lower amounts of fiber than what is ideal.

Adding fiber into such processed foods is a common way to increase fiber content. For example, energy bars and health drinks may include fibers to address the fiber deficit that is typically present in such foods. Fibers can also be used to adjust or improve the texture of various food products, so as to improve consumer acceptance of the product. But the inclusion of fiber can impart a bitter taste and unpleasant mouthfeel. Moreover, such fibers may often be combined with certain proteins, such as certain milk proteins or plant-based proteins, that also impart a bitter taste or an unpleasant mouthfeel.

Thus, there is a continuing need to develop fiber blends can be readily and easily incorporated into food and beverage products to improve the flavor and mouthfeel of the products and to enhance overall consumer satisfaction.

US2014/255590 relates to a natural food additive that can enhance and/or maintain various properties of protein-based foods and discloses a combination of psyllium and pea fiber.

### SUMMARY

The present disclosure relates to the discovery that certain fiber blends offer a beneficial taste profile, and that are suitable for development as part of an integrated taste solution for direct use in food or beverage products.

In a first aspect, the disclosure provides a fiber blend according to claim 1.

In a second aspect, the disclosure concerns the use of a comestible composition according to claim 4.

### BRIEF DESCRIPTION OF THE DRAWINGS

The following drawings are provided for purposes of illustrating various embodiments of the compositions and methods disclosed herein. The drawings are provided for illustrative purposes only, and are not intended to describe any preferred compositions or preferred methods, or to serve as a source of any limitations on the scope of the claimed inventions.
FIG. 1 shows the viscosity versus the shear rate for four compositions: water (closed circle in the bottom pair of lines); 3% inulin (open square in the bottom pair of lines); 1% gellan gum (closed circle upper pair of lines); and 3% Blend E1 (open circle in the upper pair of lines).
FIG. 2 shows evolution of the modulus as a function of time during fermentation for the several non-limiting examples of comestible compositions described herein.

### DETAILED DESCRIPTION

The following Detailed Description sets forth various aspects and embodiments provided herein. The description is to be read from the perspective of the person of ordinary skill in the relevant art. Therefore, information that is well known to such ordinarily skilled artisans is not necessarily included.

### Definitions

The following terms and phrases have the meanings indicated below, unless otherwise provided herein. This disclosure may employ other terms and phrases not expressly defined herein. Such other terms and phrases have the meanings that they would possess within the context of this disclosure to those of ordinary skill in the art. In some instances, a term or phrase may be defined in the singular or plural. In such instances, it is understood that any term in the singular may include its plural counterpart and vice versa, unless expressly indicated to the contrary

As used herein, "sweetener," "sweet flavoring agent," "sweet flavor entity," or "sweet compound" all refer to a compound or a comestibly acceptable salt thereof that elicits a detectable sweet flavor in a subject, such as a compound that activates a human T1R2 or T1R3 receptor in the course of in vitro screening or that is reported to be sweet via sensory testing by human subjects.

As used herein, the singular forms "a," "an," and "the" include plural referents unless the context clearly dictates otherwise. For example, reference to "a substituent" encompasses a single substituent as well as two or more substituents, and the like.

As used herein, "for example," "for instance," "such as," or "including" are meant to introduce examples that further clarify more general subject matter. Unless otherwise expressly indicated, such examples are provided only as an aid for understanding embodiments illustrated in the present disclosure, and are not meant to be limiting in any fashion. Nor do these phrases indicate any kind of preference for the disclosed embodiment.

As used herein, "comprise" or "comprises" or "comprising" or "comprised of" refer to groups that are open, meaning that the group can include additional members in addition to those expressly recited. For example, the phrase, "comprises A" means that A must be present, but that other members can be present too. The terms "include," "have," and "composed of" and their grammatical variants have the same meaning. In contrast, "consist of" or "consists of" or "consisting of" refer to groups that are closed. For example, the phrase "consists of A" means that A and only A is present.

As used herein, "optionally" means that the subsequently described event(s) may or may not occur. In some embodiments, the optional event does not occur. In some other embodiments, the optional event does occur one or more times.

As used herein, "or" is to be given its broadest reasonable interpretation, and is not to be limited to an either/or construction. Thus, the phrase "comprising A or B" means that A can be present and not B, or that B is present and not A, or that A and B are both present. Further, if A, for example, defines a class that can have multiple members, e.g., A₁ and A₂, then one or more members of the class can be present concurrently.

Other terms are defined in other portions of this description, even though not included in this subsection.

### Fiber Blends

In certain aspects, the disclosure provides a fiber blend, which comprises a hydrocolloid and an insoluble fiber,
wherein the hydrocolloid comprises psyllium husk fiber in an amount of from 30 percent by weight to 50 percent by weight, based on the total dry weight of the fiber blend; and wherein insoluble fiber comprises pea fiber in an amount of from 50 percent by weight to 70 percent by weight, based on the total dry weight of the fiber blend.

As used herein, the "hydrocolloid" refers to materials that are colloidally dispersible in water, meaning that they form colloidal suspensions in water. In most instances, when such hydrocolloids are dispersed in water, the hydrocolloids do not settle and are not separable from the water by filtration. Hydrocolloids can include plant-based fibers, other non-animal-derived (plant-derived, algae-derived, or fungus-derived) polysaccharides, and polypeptides. Examples of hydrocolloids are materials that commonly form gels, sols, and emulsions in water, including pectin, cellulose ethers, carrageenan, guar gum, gelatin, alginate, gum Arabic, psyllium husk fiber (or gum), xanthan gum, locust bean gum, gellan gum, a cellulose, a cellulose derivative (such as methylcellulose, carboxymethylcellulose, hydroxypropylmethylcellulose, and the like), chitosan, dextran, maltodextrin, inulin, n-octenyl succinic anhydride, tara gum, glucomannan, galactmannan, gum tragacanth, microbial polysaccharides, proteins of microbial origin, and the like.

In some embodiments of the fiber blends disclosed herein, the hydrocolloid is psyllium husk fiber. In some embodiments, the hydrocolloid comprises psyllium husk fiber in combination with one or more other hydrocolloids set forth above. For example, in some embodiments, the hydrocolloid comprises psyllium husk fiber and one or both of gellan gum and gum Arabic. In some embodiments, the hydrocolloid comprises psyllium husk fiber, gellan gum, and gum Arabic.

As noted above, the fiber blend also comprises an insoluble fiber. In general, the insoluble fiber remains suspended in the hydrocolloid matrix when the fiber blend is introduced to water at 25 °C and atmospheric pressure, for example, for at least 2 days, or at least 3 days, or at least 4 days, or at least 5 days, or at least 6 days, or at least 7 days.

According to the invention, the insoluble fiber comprises pea fiber. In some embodiments, the insoluble fiber comprises nut fibers, grain fibers, rice fibers, seed fibers, oat fibers, potato fibers, berry fibers, soybean fibers, banana fibers, citrus fibers, apple fibers, and carrot fibers.

In some embodiment, no insoluble fiber besides pea fiber is present in the fiber blend in an amount greater than 5 percent by weight, or greater than 4 percent by weight, or greater than 3 percent by weight, or greater than 2 percent by weight, or greater than 1 percent by weight, based on the total dry weight of the fiber blend.

In some embodiments, the fiber blend comprises a cross-linking agent for forming the hydrocolloids into a three-dimensional network structure. Non-limiting examples of suitable cross-linking agents include calcium chloride, calcium sulfate, calcium nitrate, zinc nitrate, zinc chloride, zinc sulfate, ammonium persulfate, and glutaraldehyde.

### Comestible Compositions (not according to the invention)

Also described herein (although not according to the invention) is a comestible composition comprising a fiber blend, as set forth above, and a flavoring.

The comestible compositions disclosed herein comprise a flavoring. In general, the flavoring improves the taste and flavor of the comestible composition or the resulting flavored product in which the comestible composition is used. Such improvement includes reducing the bitterness of the comestible composition or the resulting flavored product, reducing the perception of astringency of the comestible composition or the resulting flavored product, reducing the perception of green taste notes (such as pea taste) of the comestible composition or the resulting flavored product, reducing the perception of cereal notes of the comestible composition or the resulting flavored product, improving the perception of creaminess of the comestible composition or the resulting flavored product, improving the perception of creaminess of the comestible composition or the resulting flavored product, improving the perception of fattiness of the comestible composition or the resulting flavored product, improving the perception of sweetness of the comestible composition or the resulting flavored product, improving the perception of savory taste (umami or kokumi) of the comestible composition or the resulting flavored product, improving the mouthfeel or mouthcoating of the comestible composition or the resulting flavored product, improving the perception of juiciness of the comestible composition or the resulting flavored product, improving the perception of thickness of the comestible composition or the resulting flavored product, improving the vanillic character of the comestible composition or the resulting flavored product, or any combination thereof.

Any suitable flavoring can be used. In some embodiments, the flavoring comprises synthetic flavor oils and flavoring aromatics or oils, oleoresins and extracts derived from plants, leaves, flowers, fruits, and so forth, or combinations thereof. Non-limiting examples of flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Non-limiting examples of other flavors include natural and synthetic fruit flavors such as vanilla, and citrus oils including lemon, orange, lime, grapefruit, yazu, sudachi, and fruit essences including apple, pear, peach, grape, blueberry, strawberry, raspberry, cherry, plum, pineapple, watermelon, apricot, banana, melon, apricot, ume, cherry, raspberry, blackberry, tropical fruit, mango, mangosteen, pomegranate, papaya and so forth. Other potential flavors include a milk flavor, a butter flavor, a cheese flavor, a cream flavor, and a yogurt flavor; a vanilla flavor; tea or coffee flavors, such as a green tea flavor, a oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a chamomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor. These flavoring agents may be used in liquid or solid form and may be used individually or in admixture. In the context of dairy or dairy analog products, the most commonly used flavor agents are agents that impart flavors such as vanilla, French vanilla, chocolate, banana, lemon, hazelnut, coconut, almond, strawberry, mocha, coffee, tea, chai, cinnamon, caramel, cream, brown sugar, toffee, pecan, butter pecan, toffee, Irish crème, white chocolate, raspberry, pumpkin pie spice, peppermint, or any combination thereof.

In some embodiments, the flavoring comprises vanillin or a vanillin analogue, which impart a vanilla flavor to the flavoring. In some further embodiments, the flavoring comprises one or more lactones, which impart a creamy flavor to the flavoring.

In some embodiments, the flavoring comprises a yeast extract, such as a yeast lysate. Such extracts can be obtained from any suitable yeast strain, where such extracts are suitable for human consumption. Non-limiting examples of such yeasts include: yeasts of the genus *Saccharomyces,* such as *Saccharomyces cerevisiae* or *Saccharomyces pastorianus;* yeasts of the genus *Candida,* such as *Candida utilis;* yeasts of the genus *Kluyveromyces,* such as *Kluyveromyces lactis* or *Kluyveromyces marxianus;* yeasts of the genus *Pichia* such as *Pichia pastoris;* yeasts of the genus *Debaryomyces* such as *Debaryomyces hansenii;* and yeasts of the genus *Zygosaccharomyces* such as *Zygosaccharomyces mellis.* In some embodiments, the yeast is a yeast collected after brewing beer, sake, or the like. In some embodiments, the yeast is a yeast subjected to drying treatment (dried yeast) after collection.

Such extracts can be produced by any suitable means. In general, yeast extracts or lysates are made by extracting the contents of the yeast cells from the cell wall material. In many instances, the digestive enzymes in the cells (or additional enzymes added to the composition) break down the proteins and polynucleotides in the yeast to amino acids, oligopeptides (for example, from 2 to 10 peptides), nucleotides, oligonucleotides (from 2 to 10 nucleotides), and mixtures thereof. A yeast lysate can be prepared by lysing a yeast. For example, in some embodiments, the yeast after culture is crushed or lysed by an enzymatic decomposition method, a self-digestion method, an alkaline extraction method, a hot water extraction method, an acid decomposition method, an ultrasonic crushing method, crushing with a homogenizer, a freezing-thawing method, or the like (two or more thereof may be used in combination), whereby a yeast lysate is obtained. Yeast may be cultured by a conventional method. In some embodiments, the yeast after culture is heat-treated and then treated with a lytic enzyme to obtain an enzyme lysate. The conditions for the heat treatment are, for example, 80 °C to 90 °C for 5 minutes to 30 minutes. As the lytic enzyme used for the enzymatic decomposition method, various enzymes can be used as long as they can lyse the cell wall of yeast. The reaction conditions may be set so as to be optimum or suitable for the lytic enzyme(s) to be used, and specific examples thereof can include a temperature of 50 °C to 60 °C, and a pH of 7.0 to 8.0. The reaction time is also not particularly limited, and can be, for example, 3 hours to 5 hours.

Compositions comprising yeast lysate can be obtained from a variety of commercial sources. For example, in some embodiments, the yeast lysate is provides by the flavoring additive sold under the name MODUMAX (DSM Food Specialties BV, Delft, Netherlands).

The flavoring also includes, in certain embodiments, one or more additional flavor-modifying compounds, such as compounds that enhance sweetness (e.g., phloretin, naringenin, glucosylated steviol glycosides, etc.), compounds that block bitterness, compounds that enhance umami, compounds that enhance kokumi, compounds that reduce sourness or licorice taste, compounds that enhance saltiness, compounds that enhance a cooling effect, compounds that enhance mouthfeel, or any combinations of the foregoing.

Thus, in some embodiments, the flavoring comprises one or more sweetness enhancing compounds. Such sweetness enhancing compounds include, but are not limited to, naturally derived compounds, such as hesperitin dihydrochalcone, hesperitin dihydrochalcone-4'-O'glucoside, neohesperitin dihydrochalcone, brazzein, hesperidin, phyllodulcin, naringenin, naringin, phloretin, glucosylated steviol glycosides, (2R,3R)-3-acetoxy-5,7,4'-trihydroxyflavanone, (2R,3R)-3-acetoxy-5,7,3'-trihydroxy-4'-methoxyflavanone, rubusosides, or synthetic compounds, such as any compounds set forth in U.S. Patent Nos. 8,541,421; 8,815,956; 9,834,544; 8,592,592; 8,877,922; 9,000,054; and 9,000,051, as well as U.S. Patent Application Publication No. 2017/0119032. As used herein, the term "glucosylated steviol glycoside" refers to the product of enzymatically glucosylating natural steviol glycoside compounds. The glucosylation generally occurs through a glycosidic bond, such as an α-1,2 bond, an α-1,4 bond, an α-1.6 bond, a β-1,2 bond, a β-1,4 bond, a β-1,6 bond, and so forth. In some embodiments of any of the preceding embodiments, the comestible composition comprises 3-((4-amino-2,2-dioxo-1*H*-benzo[*c*][1,2,6]thiadiazin-5-yl)oxy)-2,2-dimethyl-*N*-propyl-propanamide or *N*-(1-((4-amino-2,2-dioxo-1*H*-benzo[c][1,2,6]thiadiazin-5-yl)oxy)-2-methyl-propan-2-yl)isonicotinamide.

In some further embodiments, the flavoring comprises one or more umami enhancing compounds. Such umami enhancing compounds include, but are not limited to, naturally derived compounds, or synthetic compounds, such as any compounds set forth in U.S. Patent Nos. 8,735,081; 8,124,121; and 8,968,708. In some embodiments, the umami-enhancing compound is (2R,4R)-1,2,4-trihydroxy-heptadec-16-ene, (2R,4R)-1,2,4-trihydroxyheptadec-16-yne, or a mixture thereof. In some embodiments, the umami-enhancing compound is (3R,5S)-1-(4-hydroxy-3-methoxyphenyl)decane-3,5-diol diacetate. In some embodiments, the umami-enhancing compound is *N*-(heptan-4-yl)benzo[*d*][1,3]dioxole-5-carboxamide.

In some further embodiments, the flavoring comprises one or more cooling enhancing compounds. Such cooling enhancing compounds include, but are not limited to, naturally derived compounds, such as menthol or analogs thereof, or synthetic compounds, such as any compounds set forth in U.S. Patent Nos. 9,394,287 and 10,421,727.

In some further embodiments, the flavoring comprises one or more bitterness blocking compounds. Such bitterness blocking compounds include, but are not limited to, naturally derived compounds, such as menthol or analogs thereof, or synthetic compounds, such as any compounds set forth in U.S. Patent Nos. 8,076,491; 8,445,692; and 9,247,759. In some embodiments, the bitterness blocking compound is 3-(1-((3,5-dimethylisoxazol-4-yl)-methyl)-1*H*-pyrazol-4-yl)-1-(3-hydroxybenzyl)-imidazolidine-2,4-dione.

In some further embodiments, the flavoring comprises one or more sour taste modulating compounds.

In some further embodiments, the flavoring comprises one or more mouthfeel modifying compounds. Such mouthfeel modifying compounds include, but are not limited to, tannins, cellulosic materials, bamboo powder, and the like.

In some further embodiments, the flavoring comprises one or more flavor masking compounds. Such flavor masking compounds include, but are not limited to, cellulosic materials, materials extracted from fungus, materials extracted from plants, citric acid, carbonic acid (or carbonates), and the like.

In some embodiments, the flavor-modifying compounds described above are included to improve other tastants that may be present in the comestible composition itself, or that may be included within the flavored products that employ such compositions. Such tastants include sweeteners, umami tastants, kokumi tastants, bitter tastants, sour tastants, and the like.

For example, in some embodiments, the comestible composition or the resulting flavored product comprises a sweetener. The sweetener can be present in any suitable concentration, depending on factors such as the sweetener's potency as a sweetener, its solubility, and the like.

For example, in some embodiments, the sweetener is present in an amount from 0.1 weight percent to 12 weight percent. In some embodiments, the sweetener is present in an amount from 0.2% to 10% by weight. In some embodiments, the sweetener is present in an amount from 0.3% to 8% by weight. In some embodiments, the sweetener is present in an amount from 0.4% to 6% by weight. In some embodiments, the sweetener is present in an amount from 0.5% to 5% by weight. In some embodiments, the sweetener is present in an amount from 1% to 2% by weight. In some embodiments, the sweetener is present in an amount from 0.1% to 5% by weight. In some embodiments, the sweetener is present in an amount from 0.1% to 4% by weight. In some embodiments, the sweetener is present in an amount from 0.1% to 3% by weight. In some embodiments, the sweetener is present in an amount from 0.1% to 2% by weight. In some embodiments, the sweetener is present in an amount from 0.1% to 1% by weight. In some embodiments, the sweetener is present in an amount from 0.1% to 0.5% by weight. In some embodiments, the sweetener is present in an amount from 0.5% to 10% by weight. In some embodiments, the sweetener is present in an amount from 2% to 8% by weight. In some further embodiments of the embodiments set forth in this paragraph, the additional sweetener is sucrose, fructose (such as high-fructose corn syrup, fruit juice, and the like), glucose, xylitol, erythritol, glucose, allulose, or any combinations thereof. In some embodiments, the sweetener is sucrose.

In some other embodiments, the sweetener is present in an amount ranging from 10 ppm to 1000 ppm. In some embodiments, the sweetener is present in an amount from 20 ppm to 800 ppm. In some embodiments, the sweetener is present in an amount from 30 ppm to 600 ppm. In some embodiments, the sweetener is present in an amount from 40 ppm to 500 ppm. In some embodiments, the sweetener is present in an amount from 50 ppm to 400 ppm. In some embodiments, the sweetener is present in an amount from 50 ppm to 300 ppm. In some embodiments, the sweetener is present in an amount from 50 ppm to 200 ppm. In some embodiments, the sweetener is present in an amount from 50 ppm to 150 ppm. In some further embodiments of the embodiments set forth in this paragraph, the additional sweetener is a steviol glycoside (such as rebaudioside A, rebaudioside D, rebaudioside E, rebaudioside M, or any combination thereof), a mogroside (such as mogroside III, mogroside IV, mogroside V, siamenoside I, isomogroside V, mogroside IV_{E}, isomogroside IV, mogroside III_{E}, 11-oxomogroside V, the 1,6-α isomer of siamenoside I, and any combinations thereof), a derivative of either of the foregoing, such as glycoside derivatives (e.g., glucosylates), cyclamate, aspartame, sucralose, acesulfame K, or any combination thereof.

In general, the compositions and flavored products can include any suitable sweeteners or combination of sweeteners. In some embodiments, the sweetener is a common saccharide sweeteners, such as sucrose, fructose, glucose, and sweetener compositions comprising natural sugars, such as corn syrup (including high fructose corn syrup) or other syrups or sweetener concentrates derived from natural fruit and vegetable sources. In some embodiments, the sweetener is sucrose, fructose, or a combination thereof. In some embodiments, the sweetener is sucrose. In some other embodiments, the sweetener is selected from rare natural sugars including D-allose, D-psicose, L-ribose, D-tagatose, L-glucose, L-fucose, L-arbinose, D-turanose, and D-leucrose. In some embodiments, the sweetener is selected from semi-synthetic "sugar alcohol" sweeteners such as erythritol, isomalt, lactitol, mannitol, sorbitol, xylitol, maltodextrin, and the like. In some embodiments, the sweetener is selected from artificial sweeteners such as aspartame, saccharin, acesulfame-K, cyclamate, sucralose, and alitame. In some embodiments, the sweetener is selected from the group consisting of cyclamic acid, mogroside, tagatose, maltose, galactose, mannose, sucrose, fructose, lactose, allulose, neotame and other aspartame derivatives, glucose, D-tryptophan, glycine, maltitol, lactitol, isomalt, hydrogenated glucose syrup (HGS), hydrogenated starch hydrolyzate (HSH), stevioside, rebaudioside A, other sweet Stevia-based glycosides, chemically modified steviol glycosides (such as glucosylated steviol glycosides), mogrosides, chemically modified mogrosides (such as glucosylated mogrosides), carrelame and other guanidine-based sweeteners. In some embodiments, the additional sweetener is a combination of two or more of the sweeteners set forth in this paragraph. In some embodiments, the sweetener may combinations of two, three, four or five sweeteners as disclosed herein. In some embodiments, the additional sweetener is a sugar. In some embodiments, the additional sweetener is a combination of one or more sugars and other natural and artificial sweeteners. In some embodiments, the additional sweetener is a sugar. In some embodiments, the sugar is cane sugar. In some embodiments, the sugar is beet sugar. In some embodiments, the sugar may be sucrose, fructose, glucose or combinations thereof. In some embodiments, the sugar is sucrose. In some embodiments, the sugar is a combination of fructose and glucose.

In some embodiments, the sweeteners can also include, for example, sweetener compositions comprising one or more natural or synthetic carbohydrate, such as corn syrup, high fructose corn syrup, high maltose corn syrup, glucose syrup, sucralose syrup, hydrogenated glucose syrup (HGS), hydrogenated starch hydrolyzate (HSH), or other syrups or sweetener concentrates derived from natural fruit and vegetable sources, or semi-synthetic "sugar alcohol" sweeteners such as polyols. Non-limiting examples of polyols in some embodiments include erythritol, maltitol, mannitol, sorbitol, lactitol, xylitol, isomalt, propylene glycol, glycerol (glycerin), threitol, galactitol, palatinose, reduced isomalto-oligosaccharides, reduced xylo-oligosaccharides, reduced gentio-oligosaccharides, reduced maltose syrup, reduced glucose syrup, isomaltulose, maltodextrin, and the like, and sugar alcohols or any other carbohydrates or combinations thereof capable of being reduced which do not adversely affect taste.

The sweetener may be a natural or synthetic sweetener that includes, but is not limited to, agave inulin, agave nectar, agave syrup, amazake, brazzein, brown rice syrup, coconut crystals, coconut sugars, coconut syrup, date sugar, fructans (also referred to as inulin fiber, fructo-oligosaccharides, or oligo-fructose), green stevia powder, stevia rebaudiana, rebaudioside A, rebaudioside B, rebaudioside C, rebaudioside D, rebaudioside E, rebaudioside F, rebaudioside I, rebaudioside H, rebaudioside L, rebaudioside K, rebaudioside J, rebaudioside N, rebaudioside O, rebaudioside M and other sweet stevia-based glycosides, stevioside, stevioside extracts, honey, Jerusalem artichoke syrup, licorice root, luo han guo (fruit, powder, or extracts), lucuma (fruit, powder, or extracts), maple sap (including, for example, sap extracted from *Acer saccharum, Acer nigrum, Acer rubrum, Acer saccharinum, Acer platanoides, Acer negundo, Acer macrophyllum, Acer grandidentatum, Acer glabrum, Acer mono),* maple syrup, maple sugar, walnut sap (including, for example, sap extracted from *Juglans cinerea, Juglans nigra, Juglans ailatifolia, Juglans regia),* birch sap (including, for example, sap extracted from *Betula papyrifera, Betula alleghaniensis, Betula lenta, Betula nigra, Betula populifolia, Betula pendula),* sycamore sap (such as, for example, sap extracted from *Platanus occidentalis),* ironwood sap (such as, for example, sap extracted from *Ostrya virginiana),* mascobado, molasses (such as, for example, blackstrap molasses), molasses sugar, monatin, monellin, cane sugar (also referred to as natural sugar, unrefined cane sugar, or sucrose), palm sugar, panocha, piloncillo, rapadura, raw sugar, rice syrup, sorghum, sorghum syrup, cassava syrup (also referred to as tapioca syrup), thaumatin, yacon root, malt syrup, barley malt syrup, barley malt powder, beet sugar, cane sugar, crystalline juice crystals, caramel, carbitol, carob syrup, castor sugar, hydrogenated starch hydrolates, hydrolyzed can juice, hydrolyzed starch, invert sugar, anethole, arabinogalactan, arrope, syrup, P-4000, acesulfame potassium (also referred to as acesulfame K or ace-K), alitame (also referred to as aclame), advantame, aspartame, baiyunoside, neotame, benzamide derivatives, bernadame, canderel, carrelame and other guanidine-based sweeteners, vegetable fiber, corn sugar, coupling sugars, curculin, cyclamates, cyclocarioside I, demerara, dextran, dextrin, diastatic malt, dulcin, sucrol, valzin, dulcoside A, dulcoside B, emulin, enoxolone, maltodextrin, saccharin, estragole, ethyl maltol, glucin, gluconic acid, glucono-lactone, glucosamine, glucoronic acid, glycerol, glycine, glycyphillin, glycyrrhizin, glycyrrhetic acid monoglucuronide, golden sugar, yellow sugar, golden syrup, granulated sugar, gynostemma, hernandulcin, isomerized liquid sugars, jallab, chicory root dietary fiber, kynurenine derivatives (including N'-formyl-kynurenine, N'-acetyl-kynurenine, 6-chloro-kynurenine), galactitol, litesse, ligicane, lycasin, lugduname, guanidine, falernum, mabinlin I, mabinlin II, maltol, maltisorb, maltodextrin, maltotriol, mannosamine, miraculin, mizuame, mogrosides (including, for example, mogroside IV, mogroside V, and neomogroside), mukurozioside, nano sugar, naringin dihydrochalcone, neohesperidine dihydrochalcone, nib sugar, nigero-oligosaccharide, norbu, orgeat syrup, osladin, pekmez, pentadin, periandrin I, perillaldehyde, perillartine, petphyllum, phenylalanine, phlomisoside I, phlorodizin, phyllodulcin, polyglycitol syrups, polypodoside A, pterocaryoside A, pterocaryoside B, rebiana, refiners syrup, rub syrup, rubusoside, selligueain A, shugr, siamenoside I, siraitia grosvenorii, soybean oligosaccharide, Splenda, SRI oxime V, steviol glycoside, steviolbioside, stevioside, strogins 1, 2, and 4, sucronic acid, sucrononate, sugar, suosan, phloridzin, superaspartame, tetrasaccharide, threitol, treacle, trilobtain, tryptophan and derivatives (6-trifluoromethyl-tryptophan, 6-chloro-D-tryptophan), vanilla sugar, volemitol, birch syrup, aspartame-acesulfame, assugrin, and combinations or blends of any two or more thereof.

In still other embodiments, the sweetener can be a chemically or enzymatically modified natural high potency sweetener. Modified natural high potency sweeteners include glycosylated natural high potency sweetener such as glucosyl-, galactosyl-, or fructosyl-derivatives containing 1-50 glycosidic residues. Glycosylated natural high potency sweeteners may be prepared by enzymatic transglycosylation reaction catalyzed by various enzymes possessing transglycosylating activity. In some embodiments, the modified sweetener can be substituted or unsubstituted.

Additional sweeteners also include combinations of any two or more of any of the aforementioned sweeteners. In some embodiments, the sweetener may comprise combinations of two, three, four or five sweeteners as disclosed herein. In some embodiments, the sweetener may be a sugar. In some embodiments, the sweetener may be a combination of one or more sugars and other natural and artificial sweeteners. In some embodiments, the sweetener is a caloric sweetener, such as sucrose, fructose, xylitol, erythritol, or combinations thereof. In some embodiments, the comestible compositions are free (or, in some embodiments) substantially free of stevia-derived sweeteners, such as steviol glycosides, glucosylated steviol glycosides, or rebaudiosides. For example, in some embodiments, the comestible compositions are either free of stevia-derived sweeteners or comprise stevia-derived sweeteners in a concentration of no more than 1000 ppm, or no more than 500 ppm, or no more than 200 ppm, or no more than 100 ppm, or no more than 50 ppm, or no more than 20 ppm, or no more than 10 ppm, or no more than 5 ppm, or no more than 3 ppm, or no more than 1 ppm.

In some embodiments, the comestible composition comprises rebaudioside A and glucosylated steviol glycosides. The rebaudioside A can be present at any concentration such as those indicated above. The glucosylated steviol glycosides can be present at concentrations ranging from 1 ppm to 50 ppm, or from 1 ppm to 40 ppm, or from 1 ppm to 30 ppm, or from 1 ppm to 20 ppm, or from 1 ppm to 10 ppm. In some other embodiments, the rebaudioside A can be partially replaced by other steviol glycoside sweeteners, such as rebaudioside M.

In some embodiments, the comestible composition comprises an emulsifier, such as a non-hydrocolloid emulsifier. Any suitable non-hydrocolloid emulsifier can be used. For example, in some non-limiting embodiments, the emulsifier comprises lecithin, monoglycerides, diglycerides, polysorbates, vegetable oils, and the like. In some embodiments, the emulsifier comprises lecithin. The emulsifier can be present in any suitable concentration, which can be adjusted so as to form a stable emulsion of the other components in the comestible composition, for example, when incorporated into a flavored product.

In some instances, it may be desirable to include additives that assist in adjusting the viscosity of the resulting flavored product (for example, when the comestible composition is introduced into water). Various salts and acids can be used to carry out such adjustments. In some embodiments, the comestible composition or the resulting flavored product comprises one or more salts. Non-limiting examples of suitable salts include magnesium sulfate, sodium chloride, sodium sulfate, calcium chloride, calcium sulfate, potassium sulfate, potassium chloride, potassium sorbate, potassium phosphate, potassium monophosphate, zinc chloride, zinc sulfate, or any mixtures thereof. In some embodiments, the comestible composition or the resulting flavored product also comprises one or more acids, which may be used alone or in combination with the aforementioned salts. Non-limiting examples of suitable acids include citric acid, lactic acid, acetic acid, tartaric acid, succinic acid, ascorbic acid, maleic acid, phosphoric acid, monopotassium phosphate, gluconic acid, glucono-lactone, glucoronic acid, glycyrrhetic acid, folic acid, pantothenic acid or mixtures thereof.

The comestible compositions can, in certain embodiments, comprise any additional ingredients or combination of ingredients as are commonly used in food and beverage products, including, but not limited to:
acids, including, for example citric acid, phosphoric acid, ascorbic acid, sodium acid sulfate, lactic acid, or tartaric acid;
bitter ingredients, including, for example caffeine, quinine, green tea, catechins, polyphenols, green robusta coffee extract, green coffee extract, potassium chloride, menthol, or proteins (such as proteins and protein isolates derived from plants, algae, or fungi);
coloring agents, including, for example caramel color, Red #40, Yellow #5, Yellow #6, Blue #1, Red #3, purple carrot, black carrot juice, purple sweet potato, vegetable juice, fruit juice, beta carotene, turmeric curcumin, or titanium dioxide;
preservatives, including, for example sodium benzoate, potassium benzoate, potassium sorbate, sodium metabisulfate, sorbic acid, or benzoic acid;
antioxidants including, for example ascorbic acid, calcium disodium EDTA, alpha tocopherols, mixed tocopherols, rosemary extract, grape seed extract, resveratrol, or sodium hexametaphosphate;
vitamins or functional ingredients including, for example resveratrol, Co-Q10, omega 3 fatty acids, theanine, choline chloride (citocoline), fibersol, inulin (chicory root), taurine, panax ginseng extract, guanana extract, ginger extract, L-phenylalanine, L-carnitine, L-tartrate, D-glucoronolactone, inositol, bioflavonoids, Echinacea, ginko biloba, yerba mate, flax seed oil, garcinia cambogia rind extract, white tea extract, ribose, milk thistle extract, grape seed extract, pyrodixine HCl (vitamin B6), cyanoobalamin (vitamin B12), niacinamide (vitamin B3), biotin, calcium lactate, calcium pantothenate (pantothenic acid), calcium phosphate, calcium carbonate, chromium chloride, chromium polynicotinate, cupric sulfate, folic acid, ferric pyrophosphate, iron, magnesium lactate, magnesium carbonate, magnesium sulfate, monopotassium phosphate, monosodium phosphate, phosphorus, potassium iodide, potassium phosphate, riboflavin, sodium sulfate, sodium gluconate, sodium polyphosphate, sodium bicarbonate, thiamine mononitrate, vitamin D3, vitamin A palmitate, zinc gluconate, zinc lactate, or zinc sulphate;
clouding agents, including, for example ester gun, brominated vegetable oil (BVO), or sucrose acetate isobutyrate (SAIB);
buffers, including, for example sodium citrate, potassium citrate, or salt;
propylene glycol, ethyl alcohol, glycerine, gum Arabic (gum acacia), modified corn starch, silicon dioxide, magnesium carbonate, or tricalcium phosphate; or
starches and stabilizers, including, for example, polysorbate 60, polysorbate 80, medium chain triglycerides, and the like.

In some embodiments, component (a) can further comprise galacto-oligosaccharides, fructo-oligosaccharides, acacia fiber, soluble pea fiber, soluble wheat fiber, arabinoxylan, isomalto-oligosaccharides, xylo-oligosaccharides, and the like.

### Uses and Methods

The preceding comestible compositions can be out to use in any suitable ways to make various products, such as food products, beverage products, oral care products, animal feed products, and the like.

In certain aspects, the disclosure provides uses of any comestible compositions of the first aspect.

In certain aspects, the present invention provides the use of a comestible composition as defined above to:
(a) reduce a bitter taste of a flavored product;
(b) reduce a perception of astringency of a flavored product;
(c) reduce a perception of green (pea) notes of a flavored product;
(d) reduce a perception of cereal notes of a flavored product;
(e) enhance a perception of creaminess of a flavored product;
(f) enhance a mouthcoating of a flavored product;
(g) enhance a perception of thickness of a flavored product; or
(h) any combination thereof.

In some embodiments, the flavored product is a food product, a beverage product, an oral care product, or an animal feed product (such as a dog feed or cat feed product). In some embodiments, the flavored product comprises one or more dairy proteins. In some embodiments, the flavored product comprises one or more non-animal proteins, such as plant proteins, mycoproteins, algal proteins, and the like.

### Flavored Products (not according to the invention)

Also described herein (although not part of the invention) are flavored products comprising any comestible compositions set forth above.

In some embodiments, the flavored products are products containing non-meat animal proteins, such as dairy proteins and proteins from bone broth. Such proteins can impart flavors that lack the full umami or kokumi taste that consumers may desire. This is especially true for protein isolates, such as protein isolates of whey protein, collagen protein, casein proteins, and the like. Thus, the present disclosure provides flavored products that include non-meat animal proteins. In some embodiments, the non-meat animal protein is a bone protein, such as a collagen protein derived from the bones of an animal, such as a cow, pig, donkey, horse, chicken, duck, goat, goose, rabbit, lamb, sheep, buffalo, ostrich, camel, and the like. In some embodiments, the non-meat animal protein is a milk protein, such as a whey protein, a casein protein, or any combination thereof. The milk can be the milk of any suitable animal, such as a cow, donkey, horse, sheep, buffalo, camel, and the like.

The comestible compositions disclosed herein can also be included in certain food or beverage products that include animal milk or materials derived from animal milk. Such products include cheeses, cheese spreads, yogurt, kefir, milk, processed dairy products, cottage cheese, sour cream, butter, and the like.

When the fiber-containing comestible compositions set forth above are included in such flavored products, the non-meat animal proteins can be present in any suitable ratio relative to the fiber. For example, in some embodiments, the weight ratio of non-meat animal protein to fiber in the flavored product ranges from 5:1 to 40:1, or from 10:1 to 30:1, or from 12:1 to 25:1. In some other embodiments, the weight ratio of non-meat animal protein to fiber in the flavored product ranges from 1:10 to 10:1, or from 1:5 to 5:1, or from 1:3 to 3:1.

In certain aspects, the flavored product comprises a non-animal protein, such as a plant protein, an algal protein, or a mycoprotein. In some embodiments, the flavored product comprises a plant-based protein. Non-limiting examples of plant proteins include pea protein, soy protein, almond protein, cashew protein, canola (rapeseed) protein, chickpea protein, fava protein, sunflower protein, wheat protein, oat protein, and potato protein.

The flavored products containing such non-animal proteins can be any suitable product. In some embodiments, the flavored product is a beverage, such as soy milk, almond milk, rice milk, coconut milk, oat milk, a protein drink, a meal-replacement drink, a dairy-free yogurt or kefir product, and the like. In some instances, such products are designed to simulate dairy products, and may be referred to as dairy analogue products. In some other embodiments, the flavored product is a meat-replacement product, such as a plant-based chicken product (such as a plant-based chicken nugget), a plant-based beef product (such as a plant-based burger), and the like. In some other embodiments, the flavored product is a protein powder, a meal-replacement powder, a plant-based creamer for coffee or tea, and the like. In certain further embodiments, any such products contain additional ingredients, and have additional features, as are typically used in the preparation and/or manufacture of such products.

When the fiber-containing comestible compositions set forth above are included in such flavored products, the non-animal proteins can be present in any suitable ratio relative to the fiber. For example, in some embodiments, the weight ratio of non-animal protein to fiber in the flavored product ranges from 5:1 to 40:1, or from 10:1 to 30:1, or from 12:1 to 25:1. In some other embodiments, the weight ratio of non-animal protein to fiber in the flavored product ranges from 1:10 to 10:1, or from 1:5 to 5:1, or from 1:3 to 3:1.

In some other embodiments where the flavored product is a beverage, the beverage may be selected from the group consisting of enhanced sparkling beverages, colas, lemon-lime flavored sparkling beverages, orange flavored sparkling beverages, grape flavored sparkling beverages, strawberry flavored sparkling beverages, pineapple flavored sparkling beverages, ginger-ales, root beers, fruit juices, fruit-flavored juices, juice drinks, nectars, vegetable juices, vegetable-flavored juices, sports drinks, energy drinks, enhanced water drinks, enhanced water with vitamins, near water drinks, coconut waters, tea type drinks, coffees, cocoa drinks, beverages containing milk components, beverages containing cereal extracts and smoothies. In some embodiments, the beverage may be a soft drink.

In some embodiments, the flavored product further comprises a carrier and, optionally, at least one adjuvant. The term "carrier" denotes a usually inactive accessory substance, such as solvents, binders, bulking agents, or other inert medium, which is used in combination with the present compound and one or more optional adjuvants to form the formulation. For example, water or starch can be a carrier for a flavored product. In some embodiments, the carrier is the same as the diluting medium for reconstituting the flavored product; and in other embodiments, the carrier is different from the diluting medium. The term "carrier" as used herein includes, but is not limited to, comestibly acceptable carrier.

The term "adjuvant" denotes an additive which supplements, stabilizes, maintains, or enhances the intended function or effectiveness of the active ingredient, such as the compound of the present invention. In one embodiment, the at least one adjuvant comprises one or more flavoring agents. The flavoring agent may be of any flavor known to one skilled in the art or consumers, such as the flavor of chocolate, coffee, tea, mocha, French vanilla, peanut butter, chai, or combinations thereof. In another embodiment, the at least one adjuvant comprises one or more sweeteners. The one or more sweeteners can be any of the sweeteners described in this application. In another embodiment, the at least one adjuvant comprises one or more ingredients selected from the group consisting of a emulsifier, a stabilizer, an antimicrobial preservative, an antioxidant, vitamins, minerals, fats, starches, protein concentrates and isolates, salts, and combinations thereof. Examples of emulsifiers, stabilizers, antimicrobial preservatives, antioxidants, vitamins, minerals, fats, starches, protein concentrates and isolates, and salts are described in U.S. Pat. No. 6,468,576, the content of which is hereby incorporated by reference in its entirety for all purposes.

The flavored product may further comprise a freezing point depressant, nucleating agent, or both as the at least one adjuvant. The freezing point depressant is an ingestibly acceptable compound or agent which can depress the freezing point of a liquid or solvent to which the compound or agent is added. That is, a liquid or solution containing the freezing point depressant has a lower freezing point than the liquid or solvent without the freezing point depressant. In addition to depress the onset freezing point, the freezing point depressant may also lower the water activity of the flavored product. The examples of the freezing point depressant include, but are not limited to, carbohydrates, oils, ethyl alcohol, polyol, e.g., glycerol, and combinations thereof. The nucleating agent denotes an ingestibly acceptable compound or agent which is able to facilitate nucleation. The presence of nucleating agent in the flavored product can improve the mouthfeel of the frozen Blushes of a frozen slush and to help maintain the physical properties and performance of the slush at freezing temperatures by increasing the number of desirable ice crystallization centers. Examples of nucleating agents include, but are not limited to, calcium silicate, calcium carbonate, titanium dioxide, and combinations thereof.

In some embodiments, the flavored product is formulated to have a low water activity for extended shelf life. Water activity is the ratio of the vapor pressure of water in a formulation to the vapor pressure of pure water at the same temperature. In one embodiment, the flavored product has a water activity of less than about 0.85. In another embodiment, the flavored product has a water activity of less than about 0.80. In another embodiment, the flavored product has a water activity of less than about 0.75.

### Methods of Preparation (not according to the invention)

The comestible compositions disclosed herein can be made by any suitable means, as typically employed in the manufacturing of products containing fiber blends. Such methods include dry mixing, granulating, encapsulating, spray drying, and the like.

### EXAMPLES

To further illustrate this invention, the following examples are included. The examples should not, of course, be construed as specifically limiting the invention. Variations of these examples within the scope of the claims are within the purview of one skilled in the art and are considered to fall within the scope of the invention as described, and claimed herein. The reader will recognize that the skilled artisan, armed with the present disclosure, and skill in the art is able to prepare and use the invention without exhaustive examples.

### Example 1 - Fiber-Containing Milk Analogue Product

Table 1 below shows a series of different milk analogue products, where the numbers reported indicate the relative weight percent of that component in the flavored product. To make the milk analogue products, the water was preheated at 70 °C. The powder blends were pre-mixed (protein, sugar, and fibers/hydrocolloids). A predispersion was prepared by dispersing the powder blend into water at 70 °C (Ultra-Turax T50, Dispersion tool , speed 2, 10 min), followed by high pressure homogenization at a pressure of 150 bar (120 bar 1st stage - 30 bar 2nd stage), remaining at 70 °C. Pasteurization was then performed with a Thermomix device at -90° during 10 minutes at a speed setting of 2.5, followed by cooling down to room temperature during 30 minutes. Samples were then stored in the refrigerator until evaluation and characterization.

**Table 1**

| | **A** | **B** | **C** | **D** |
|---|---|---|---|---|
| Deionized Water | 94.0 | 93.9 | 93.7 | 93.6 |
| Sucrose | 3.0 | 3.0 | 3.0 | 3.0 |
| Pea Protein Isolate | 3.0 | 3.0 | 3.0 | 3.0 |
| Flavoring* | -- | 0.12 | -- | 0.12 |
| Fiber Blend** | -- | -- | 0.30 | 0.30 |

| | | | | |
|---|---|---|---|---|
| * The flavoring principally comprises a yeast extract (MODUMAX) ** The fiber blend consists of 40% by weight psyllium fiber and 60% by weight pea fiber | | | | |

The four samples were evaluated for sensory testing using 8-10 tasters, where the tasters rated the resulting blend. Table 2 sets forth the results, normalized to a top score being 3.5.

**Table 2**

| | **A** | **B** | **C** | **D** |
|---|---|---|---|---|
| Sweetness | 2.7 | 3.2 | 2.5 | 3.2 |
| Bitterness | 3.0 | 2.0 | 2.3 | 2.0 |
| Astringency | 3.5 | 2.0 | 2.6 | 1.9 |
| Mouthcoating | 1.2 | 2.0 | 2.1 | 2.6 |
| Thickness | 1.1 | 1.5 | 2.0 | 2.0 |
| Fattiness | 1.5 | 1.7 | 1.7 | 1.7 |
| Green Vegetable Note | 3.5 | 2.3 | 2.8 | 2.3 |
| Cereal Note | 2.7 | 2.5 | 2.1 | 2.3 |
| Creaminess | 0.7 | 1.6 | 1.0 | 2.3 |

### Example 2 - Fiber-Containing Flavored Blend

Dairy analogue drinks were prepared according to the procedure described in Example 1, but with a composition not containing any plant-based protein. The advantage of such protein-free composition is that it may be used flexibly for improving by flavoring and thickening an existing water/protein/sugar or water/protein/sweetener, or water/protein base drink.

### Example 3 - Gellan Gum Comparison

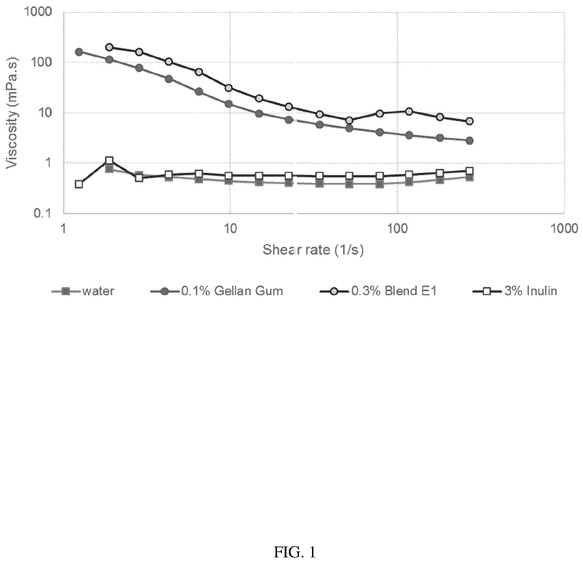

An example of a hydrocolloid blend to mimic the rheological properties of gellan gum is shown in FIG. 1. Rheology measurements (steady state flow curves, measured at a temperature of 23 °C with a CP50-2 cone/plate geometry on an MCR300 rheometer (Anton Paar, Germany) were performed for compositions comprising either 0.3% w/w of Blend E1 (fiber blend used in Example 1), or and 3% w/w inulin, compared to water and a reference composition comprising 0.1% (w/w) of gellan gum. These viscosity data demonstrate that 0.3% w/w of Blend E1 mimics 0.1% (w/w) of gellan gum in such compositions, and may therefore be used as a substitute for gellan gun in such compositions, whereas inulin does not allow such an effect even at a 10-fold higher concentration of 3% (w/w).

### Example 4 - Milk Analogue Product Containing Fiber, Gellan Gum and Acacia Gum

Dairy analogue drinks were prepared according to the procedure described in Example 1 for blends C and D, except that the fiber blend was combined with a combination of gellan gum and Acacia gum to obtain a combined blend BC1 of psyllium fiber, pea fiber, gellan gum, and Acacia gum (also known as gum Arabic). The composition contained 88.5% (w/w) deionized water, 3% (w/w) sucrose, 3% (w/w) pea protein isolate, 0.1% (w/w) flavoring, and 5.4% (w/w) of blend BC1, with blend BC1 being composed of 92.6% (w/w) acacia gum, 2.25% (w/w) psyllium fiber, 3.25% (w/w) pea fiber, and 1.9% (w/w) gellan gum.

Acacia gum was used to provide an interface-active colloidal stabilizer that stabilizes the insoluble or partially insoluble fiber against aggregation or agglomeration, and the gellan gum is used as a stabilizer against gravitational sedimentation of suspended fiber particles. When used with the homogenization process described in Example 1, such combinations provide the unexpected advantage of enhancing the mouthfeel of milk analogue products. Moreover, since fiber raw materials often may contain insoluble impurities, such formulations facilitate the preparation of stable liquid-format protein-based products.

### Example 5 - Fermented Dairy Analogue Product Containing Fiber Blends

Fermented dairy analogue products were prepared using a commercial soybean drink (Boisson Soja Nature, purchased from a Carrefour Market in France), a fiber blend (fiber blend of Example 1), and a starter culture ("Ferments lactiques yaourt maison" produced by Alsa, France). In one instance, the starter was added to the soybean base at concentration of 0.2% (w/w) followed by manual stirring to obtain a mixture M. In another instance, a blend of starter culture and fiber was prepared and added to the soybean drink to obtain the same starter concentration of 0.2% (w/w) and a fiber concentration of 0.15% (w/w) to obtain mixture MF1, and, alternatively, at a fiber concentration of 1.3% (w/w) to obtain mixture MF2.

For sensory panel tasting evaluations, fermentation was carried out in closed cups containing 100 g of mixture M, MF1, or MF2, respectively, and was performed following pasteurization and cooling in a thermostat bath, in an analogous manner as that described in Example 1. Fermentation was initiated at 42 °C for 9 hours. The cups were then collected and stored in a refrigerator and evaluated by sensory panels.

Additional fermentation experiments were performed directly in a rheometer, allowing maintenance of the samples at temperature conditions appropriate for fermentation, while simultaneously measuring the rheological properties. The rheometer instrument used was a TA Instruments DHR-2 rheometer using a concentric cylinder measuring geometry (cylinder radius 14 mm, cup inner radius 15 mm). Oscillatory shear experiments (described in R. G. Larson, The Structure and Rheology of Complex Fluids, Oxford University Press, UK, 1998) were performed at a temperature of 42 °C in the rheometer, at a constant deformation amplitude of 0.5% and a constant angular oscillation frequency of 1 rad/s while measuring the complex shear modulus G.

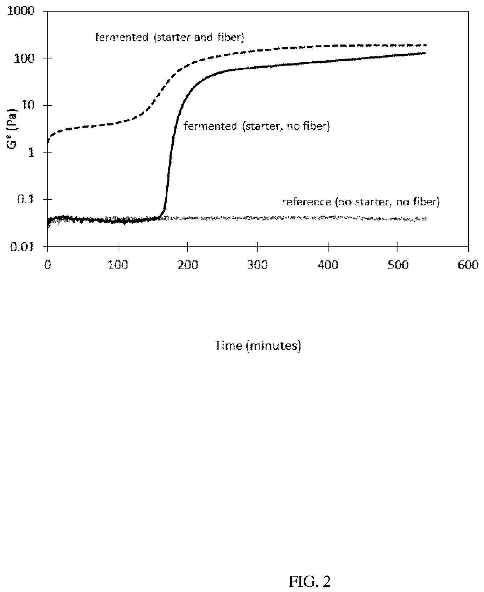

FIG. 2 shows the evolution of the modulus as a function of time during fermentation for the reference (without starter culture and without fiber), the soy base containing 0.2% (w/w) starter culture but no fiber (mixture M), and the soy base containing both 0.2% (w/w) starter culture and 1.3% (w/w) fiber (i.e., mixture MF2). FIG. 2 shows how the fiber addition results in an increased modulus, which a suitable means of quantifying the texture of fermented dairy products (Vasbinder et al., INT. DAIRY J. vol. 13, pp. 29-38 (2003)). It was observed that the addition of the fiber blend allowed the composition to reach comparable levels of modulus at a much earlier time, compared to the case without fiber. As shown in FIG. 2, the modulus reached a value of 100 Pa already after 190 minutes, whereas in the absence of fiber, it required more than 8 hours of fermentation to reach comparable levels.

The use of the fiber blend in the fermented dairy analogue product not only enhanced the texture of the product, but also allowed for considerable acceleration of the manufacturing of such products, thereby reducing processing time and energy consumption.

### Example 6 - Fermented Dairy Analogue Product Containing Fiber Blend and Flavoring

Fermented soy-based yoghurt analogue products were prepared according to the procedure set forth in Example 5, except that, in this case, the fiber blend was pre-blended with a flavoring composition to obtain the same flavor concentration in the final product as in the compositions set forth in Example 1.

In one instance, a liquid flavor was pre-blended with the fiber ingredients by laboratory-scale liquid/powder blending. Such preparations demonstrated the benefits of using a pre-blended powder mixture, which is more suitable in a manufacturing context. In another instance, a powdered flavor composition was used, and a blend of fiber and flavor powder was prepared before the addition.

## Claims

1. A fiber blend, which comprises a hydrocolloid and an insoluble fiber,
wherein the hydrocolloid comprises psyllium husk fiber in an amount of from 30 percent by weight to 50 percent by weight, based on the total dry weight of the fiber blend; and
wherein insoluble fiber comprises pea fiber in an amount of from 50 percent by weight to 70 percent by weight, based on the total dry weight of the fiber blend.

2. The fiber blend of claim 1, wherein the insoluble fiber comprises nut fiber, grain fiber, rice fiber, seed fiber, oat fiber, potato fiber, berry fiber, soybean fiber, banana fiber, citrus fiber, apple fiber, carrot fiber, or a combination thereof.

3. The fiber blend of claim 1 or 2, wherein no insoluble fiber besides pea fiber is present in the fiber blend in an amount greater than 5 percent by weight, or greater than 4 percent by weight, or greater than 3 percent by weight, or greater than 2 percent by weight, or greater than 1 percent by weight, based on the total dry weight of the fiber blend.

4. Use of a comestible composition comprising (i) a fiber blend of any one of claims 1 to 3 and (ii) a flavoring to:
(a) reduce a bitter taste of a flavored product;
(b) reduce a perception of astringency of a flavored product;
(c) reduce a perception of green (pea) notes of a flavored product;
(d) reduce a perception of cereal notes of a flavored product;
(e) enhance a perception of creaminess of a flavored product;
(f) enhance a mouthcoating of a flavored product;
(g) enhance a perception of thickness of a flavored product; or
(h) any combination thereof.

## Patentansprüche

1. Fasermischung, die ein Hydrokolloid und eine unlösliche Faser umfasst,
wobei das Hydrokolloid Flohsamenschalenfaser in einer Menge von 30 Gewichtsprozent bis 50 Gewichtsprozent, bezogen auf das Gesamttrockengewicht der Fasermischung, umfasst; und
wobei die unlösliche Faser Erbsenfaser in einer Menge von 50 Gewichtsprozent bis 70 Gewichtsprozent, bezogen auf das Gesamttrockengewicht der Fasermischung, umfasst.

2. Fasermischung nach Anspruch 1, wobei die unlösliche Faser Nussfaser, Getreidefaser, Reisfaser, Samenfaser, Haferfaser, Kartoffelfaser, Beerenfaser, Sojabohnenfaser, Bananenfaser, Zitrusfaser, Apfelfaser, Karottenfaser oder eine Kombination davon umfasst.

3. Fasermischung nach Anspruch 1 oder 2, wobei in der Fasermischung außer Erbsenfaser keine unlösliche Faser in einer Menge von mehr als 5 Gewichtsprozent oder mehr als 4 Gewichtsprozent oder mehr als 3 Gewichtsprozent oder mehr als 2 Gewichtsprozent oder mehr als 1 Gewichtsprozent, bezogen auf das Gesamttrockengewicht der Fasermischung, vorhanden ist.

4. Verwendung einer Nahrungsmittelzusammensetzung, die (i) eine Fasermischung nach einem der Ansprüche 1 bis 3 und (ii) einen Geschmacksstoff umfasst, um:
(a) einen bitteren Geschmack eines aromatisierten Produkts zu verringern;
(b) eine Wahrnehmung der Adstringenz eines aromatisierten Produkts zu verringern;
(c) eine Wahrnehmung grüner (Erbsen-)Noten eines aromatisierten Produkts zu verringern;
(d) eine Wahrnehmung von Getreidenoten eines aromatisierten Produkts zu verringern;
(e) eine Wahrnehmung der Cremigkeit eines aromatisierten Produkts zu verstärken;
(f) ein Mundfüllen eines aromatisierten Produkts zu verstärken;
(g) eine Wahrnehmung der Sämigkeit eines aromatisierten Produkts zu verstärken; oder
(h) eine beliebige Kombination davon.

## Revendications

1. Mélange de fibres, qui comprend un hydrocolloïde et une fibre insoluble,
dans lequel l'hydrocolloïde comprend des fibres de cosses de psyllium en une quantité de 30 pour cent en poids à 50 pour cent en poids, sur la base du poids sec total du mélange de fibres ; et
dans lequel la fibre insoluble comprend de la fibre de pois dans une quantité de 50 pour cent en poids à 70 pour cent en poids, sur la base du poids sec total du mélange de fibres.

2. Mélange de fibres selon la revendication 1, dans lequel la fibre insoluble comprend des fibres de noix, des fibres de céréales, des fibres de riz, des fibres de graines, des fibres d'avoine, des fibres de pomme de terre, des fibres de baies, des fibres de soja, des fibres de banane, des fibres d'agrumes, des fibres de pomme, des fibres de carotte, ou une combinaison de celles-ci.

3. Mélange de fibres selon la revendication 1 ou 2, dans lequel aucune fibre insoluble autre que la fibre de pois n'est présente dans le mélange de fibres en une quantité supérieure à 5 pour cent en poids, ou supérieure à 4 pour cent en poids, ou supérieure à 3 pour cent en poids, ou supérieure à 2 pour cent en poids, ou supérieure à 1 pour cent en poids, sur la base du poids sec total du mélange de fibres.

4. Utilisation d'une composition comestible comprenant (i) un mélange de fibres selon l'une quelconque des revendications 1 à 3 et (ii) un arôme pour :
(a) réduire le goût amer d'un produit aromatisé ;
(b) réduire la perception d'astringence d'un produit aromatisé ;
(c) réduire la perception des notes vertes (pois) d'un produit aromatisé ;
(d) réduire la perception des notes de céréales d'un produit aromatisé ;
(e) améliorer la perception de l'onctuosité d'un produit aromatisé ;
(f) améliorer l'enrobage en bouche d'un produit aromatisé ;
(g) améliorer la perception de l'épaisseur d'un produit aromatisé ; ou
(h) toute combinaison de ceux-ci.
